(19) **Europäisches Patentamt / European Patent Office / Office européen des brevets**

(11) **EP 4 672 025 A1**

(12) **EUROPEAN PATENT APPLICATION**

(43) Date of publication:
**31.12.2025 Bulletin 2026/01**

(21) Application number: **25184121.9**

(22) Date of filing: **20.06.2025**

(51) International Patent Classification (IPC):
**G06F 16/3329** (2025.01)    **G06F 40/30** (2020.01)

(52) Cooperative Patent Classification (CPC):
**G06F 16/3329; G06F 40/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.06.2024 IN 202421048660**

(71) Applicant: **Tata Consultancy Services Limited Mumbai, Maharashtra 400 021 (IN)**

(72) Inventors:
• **SINHA, Manjira**
  **700135 Kolkata, West Bengal (IN)**
• **DASGUPTA, Tirthankar**
  **700135 Kolkata, West Bengal (IN)**
• **SAHA, Diya**
  **700135 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMPUTING VARIABILITY AND CONFIDENCE SCORES FOR RESPONSES GENERATED BY LARGE LANGUAGE MODELS (LLMS)**

(57)    The rapid proliferation of Large Language Models (LLMs) across diverse organizations, domains, and modalities has revolutionized natural language processing applications. Despite their widespread adoption, a critical challenge persists: the inherent tendency of LLMs to hallucinate, exhibit substantial variability in responses, and often lack confidence in their predictions. Embodiments of the present disclosure provide system and method address the challenges associated with LLMs by identifying and selecting models for which various graphs such as query graph, response graph, and document graph are generated given one or more input queries and one or more documents. Various sets of edges are determined for computing variability score. Further, graph clustering is performed on response graph to compute a confidence score. The present disclosure enhances the reliability of LLM outputs, providing users with more consistent and trustworthy results across various applications.

| |
|---|
| receiving at least one query from a user — 202 |
| in the event that the at least one query represents a plurality of queries: generating, by using one or more Large Language Models (LLMs), one or more paraphrase questions based on the one or more queries received from the user — 204 |
| constructing, by using the one or more LLMs , a first graph based on the one or more paraphrase questions — 206 |
| receiving at least one document — 208 |
| in the event that the at least one document represents a plurality of documents, constructing, by using the one or more LLMs, a second graph — 210 |
| constructing, by using the one or more LLMs, a third graph comprising one or more responses for the one or more paraphrase questions based on the at least one query, wherein the one or more responses are obtained from the at least one document — 212 |
| in the event that the at least one document represents the plurality of documents and the at least one query represents the plurality of queries, performing a comparison of the first graph, the second graph and the third graph to obtain a fourth graph — 214 |
| determining, by using the one or more LLMs, a first set of edges and a second set of edges in the at least one of (i) the first graph, the second graph and the fourth graph, and (ii) the third graph respectively — 210 |
| computing a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries — 210 |

**FIG. 2**

# EP 4 672 025 A1

**Description**

CROSS-REFERENCE TO RELATED APPLICATIONS AND PRIORITY

The present application claims priority to Indian application no. 202421048660, filed on June 25, 2024.

TECHNICAL FIELD

The disclosure herein generally relates to performance evaluation of large language models (LLMs), and, more particularly, to systems and methods for computing variability and confidence scores for responses generated by large language models (LLMs).

BACKGROUND

The rapid proliferation of Large Language Models (LLMs) across diverse organizations, domains, and modalities has revolutionized natural language processing applications. Despite their widespread adoption, a critical challenge persists: the inherent tendency of LLMs to hallucinate, exhibit substantial variability in responses, and often lack confidence in their predictions.

SUMMARY

Embodiments of the present disclosure present technological improvements as solutions to one or more of the above-mentioned technical problems recognized by the inventors in conventional systems.

For example, in one aspect, there is provided a processor implemented method for computing variability and confidence scores for responses generated by large language models (LLMs). The method comprises receiving, via one or more hardware processors, at least one query from a user; in the event that the at least one query represents a plurality of queries: generating, by using one or more Large Language Models (LLMs) via the one or more hardware processors, one or more paraphrase questions based on the one or more queries received from the user; and constructing, by using the one or more LLMs via the one or more hardware processors, a first graph based on the one or more paraphrase questions; receiving, via the one or more hardware processors, at least one document; in the event that the at least one document represents a plurality of documents, constructing, by using the one or more LLMs via the one or more hardware processors, a second graph; constructing, by using the one or more LLMs via the one or more hardware processors, a third graph comprising one or more responses for the one or more paraphrase questions based on the at least one query, wherein the one or more responses are obtained from the at least one document; in the event that the at least one document represents the plurality of documents and the at least one query represents the plurality of queries, performing, via the one or more hardware processors, a comparison of the first graph, the second graph and the third graph to obtain a fourth graph; determining, by using the one or more LLMs via the one or more hardware processors, a first set of edges and a second set of edges in the at least one of (i) the first graph, the second graph and the fourth graph, and (ii) the third graph respectively; and computing, by using the one or more LLMs via the one or more hardware processors, a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries.

In an embodiment, the method further comprises performing a graph clustering on the third graph to determine a plurality of dense regions; clustering the plurality of dense regions to obtain one or more dense regions clusters; and computing a confidence score for the third graph based on the one or more dense regions clusters, wherein the confidence score refers to a measure of consistency and reliability of the one or more responses comprised in the third graph.

In an embodiment, the first set of edges and the second set of edges are determined based on a comparison of an associated weight and a pre-determined threshold.

In an embodiment, the associated weight assigned to each edge is based on a cosine similarity between two adjacent nodes in an associated graph.

In an embodiment, the comparison of the first graph, the second graph and the third graph to obtain the fourth graph is performing using a query document composition technique.

In another aspect, there is provided a processor implemented system for computing variability and confidence scores for responses generated by large language models (LLMs). The system comprises: a memory storing instructions; one or more communication interfaces; and one or more hardware processors coupled to the memory via the one or more communication interfaces, wherein the one or more hardware processors are configured by the instructions to: receive at least one query from a user; in the event that the at least one query represents a plurality of queries: generate, by using one or more Large Language Models (LLMs), one or more paraphrase questions based on the one or more queries received from the user; and construct, by using the one or more LLMs, a first graph based on the one or more paraphrase questions; receive at least one document; in the event that the at least one document represents a plurality of documents, construct, by using the one or more LLMs, a second graph; construct, by using the one or more LLMs, a third graph comprising one or more responses for the one or more paraphrase questions based on the at least one query, wherein the one or more responses are obtained from the at least one document; in the event that the at least one document represents the plurality of documents and the at least one query represents the plurality of queries, perform a comparison of the first graph, the second graph and the third graph to obtain a fourth graph; determine, by using the one or more LLMs, a first set of edges and a second set of edges in the at least one of (i) the first graph, the second graph and the fourth graph, and (ii) the third graph respectively; and compute, by using the one or more LLMs, a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries.

In an embodiment, the one or more hardware processors are configured by the instructions to perform a graph clustering on the third graph to determine a plurality of dense regions; cluster the plurality of dense regions to obtain one or more dense regions clusters; and compute a confidence score for the third graph based on the one or more dense regions clusters, wherein the confidence score refers to a measure of consistency and reliability of the one or more responses comprised in the third graph.

In an embodiment, the first set of edges and the second set of edges are determined based on a comparison of an associated weight and a pre-determined threshold.

In an embodiment, the associated weight assigned to each edge is based on a cosine similarity between two adjacent nodes in an associated graph.

In an embodiment, the comparison of the first graph, the second graph and the third graph to obtain the fourth graph is performing using a query document composition technique.

In yet another aspect, there are provided one or more non-transitory machine-readable information storage mediums comprising one or more instructions which when executed by one or more hardware processors cause computing variability and confidence scores for responses generated by large language models (LLMs) by receiving at least one query from a user; in the event that the at least one query represents a plurality of queries: generating, by using one or more Large Language Models (LLMs), one or more paraphrase questions based on the one or more queries received from the user; and constructing, by using the one or more LLMs, a first graph based on the one or more paraphrase questions; receiving, via the one or more hardware processors, at least one document; in the event that the at least one document represents a plurality of documents, constructing, by using the one or more LLMs, a second graph; constructing, by using the one or more LLMs, a third graph comprising one or more responses for the one or more paraphrase questions based on the at least one query, wherein the one or more responses are obtained from the at least one document; in the event that the at least one document represents the plurality of documents and the at least one query represents the plurality of queries, performing a comparison of the first graph, the second graph and the third graph to obtain a fourth graph; determining, by using the one or more LLMs via the one or more hardware processors, a first set of edges and a second set of edges in the at least one of (i) the first graph, the second graph and the fourth graph, and (ii) the third graph respectively; and computing, by using the one or more LLMs, a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries.

In an embodiment, the one or more instructions which when executed by one or more hardware processors further cause performing a graph clustering on the third graph to determine a plurality of dense regions; clustering the plurality of dense regions to obtain one or more dense regions clusters; and computing a confidence score for the third graph based on the one or more dense regions clusters, wherein the confidence score refers to a measure of consistency and reliability of the one or more responses comprised in the third graph.

In an embodiment, the first set of edges and the second set of edges are determined based on a comparison of an associated weight and a pre-determined threshold.

In an embodiment, the associated weight assigned to each edge is based on a cosine similarity between two adjacent nodes in an associated graph.

In an embodiment, the comparison of the first graph, the second graph and the third graph to obtain the fourth graph is performing using a query document composition technique.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for computing variability and confidence scores for responses generated by large language models (LLMs), in accordance with an embodiment of the present disclosure.

FIG. 2 depicts an exemplary flow chart illustrating a method for computing variability and confidence scores for responses generated by large language models (LLMs), using the system of FIG. 1, in accordance with an embodiment of the present disclosure.

FIG. 3 depicts a block diagram illustrating a method for computing the variability score for the first scenario having received a single document given as repository with multiple queries from a user, in accordance with an embodiment of the present disclosure.

FIG. 4 depicts a block diagram illustrating a method for computing the variability score for the second scenario having received multiple documents given as repository with a single query from the user, in accordance with an embodiment of the present disclosure.

FIG. 5 depicts a block diagram illustrating a method for computing the variability score for the third scenario having received multiple documents given as repository with multiple queries from the user, in accordance with an embodiment of the present disclosure.

FIG. 6 depicts clusters of dense regions associated with a response graph for computation of confidence score for LLMs, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Large Language Models (LLMs) have become indispensable tools for a wide array of applications, ranging from natural language understanding to content generation. However, the unrestrained growth of LLMs has unveiled a significant concern - their susceptibility to hallucinations, inconsistent responses, and a lack of confidence in their predictions. This poses a substantial hurdle for users and organizations relying on the outputs of LLMs, particularly in scenarios where precision and reliability are paramount.

Embodiments of the present disclosure provide method and system designed to address the challenges associated with LLMs by identifying and selecting models that demonstrate low variability and exhibit a high confidence factor. The present disclosure aims to enhance the reliability of LLM outputs, providing users with more consistent and trustworthy results across various applications. The method of the present disclosure involves a comprehensive evaluation of two critical LLM performance metrics namely, the variability of response and the confidence of response, through a curated set of validation data. By leveraging advanced statistical techniques and machine learning algorithms, the system can discern patterns and characteristics that distinguish LLMs with superior performance in terms of variability and confidence.

The potential applications of the present method and system span a broad spectrum, including but not limited to natural language understanding, content creation, and decision support systems. Organizations and individuals relying on LLM outputs can benefit from improved predictability and reduced uncertainty, thereby enhancing the overall effectiveness of their applications. In summary, the method and system described herein offer a pioneering solution to the persistent challenges associated with LLMs, ensuring that users can confidently choose models with low variability and high confidence, ultimately advancing the reliability and applicability of LLMs across diverse domains and applications.

Table 1

| DIFFERENT ANSWERS FOR PARAPHRASE OF SAME QUESTION | |
| --- | --- |
| Paraphrase Questions | Answer for Paraphrase Questions |
| At what time did the Federal judge mandate the US Portal Service to compensate its employees with $229K? | The federal judge order the US Portal Service to pay its employees $229,000 in compensation on December 4, 2012. |

(continued)

| DIFFERENT ANSWERS FOR PARAPHRASE OF SAME QUESTION | |
|---|---|
| Paraphrase Questions | Answer for Paraphrase Questions |
| When did the Federal judge instruct the US Portal Service to disburse $229K to its workforce? | Based on the text, there is no mention of the US Portal Service or any order by a federal judge to disburse money to employees |
| When did the Federal judge prescribe that the US Portal Service should distribute $229,000 among its employees? | On September 11, 2015, a federal judge ordered US Portal Service to distribute $229,000 among its employees. |

Table 2

| DIFFERENT ANSWERS FOR SAME QUESTION | |
|---|---|
| Paraphrase Questions | Answer for Paraphrase Questions |
| In which industries are allegations of gender discrimination prevalent? | Based on the provided documents, allegations of gender discrimination have been made against the following industries: plastics product manufacturing, trucking, commercial cleaning, and construction clean-up. |
| What fields face accusations of gender bias? | Based on the given documents, accusations of gender bias have been made against companies in the manufacturing industry specifically plastics products manufacturers like Polycon Industries and Crown Packaging International. |
| Which industries face scrutiny for potential gender discrimination | Based on the provided documents, the plastics industry and trucking industry have faced scrutiny for potential gender discrimination. |

While experimenting the Question Answering in LLM, the system and the method of the present disclosure have faced various challenges:

1. Different answers are given for the same question at different times (e.g., refer Table 2).
2. Answers with different content are given for different paraphrases of the same question (e.g., refer Table 1).

If a doubt is raised in the prompt, then LLM changes the answer even if it is correct. From the above examples, it can be observed that before checking LLMs' ability to provide correct answers, the system 100 needs to check the consistency and variability of LLM-provided answers. A confident wrong answer has a better chance of improving the hallucinatory properties of Large Language Models. To check these properties the system and the method of the present disclosure introduce two metrics: Confidence Score and Variability Score. These two scores of any LLM are provided by checking responses generated by respective LLM for a query given as user input. The present disclosure defines confidence score as the measure of consistency and reliability of a response across multiple iterations or doubts, reflecting the answer provided is dependable. The variability score is defined as the frequency with which it provides similar plausible responses to a given query, indicating consistency or repetition in its generated outputs across multiple interactions.

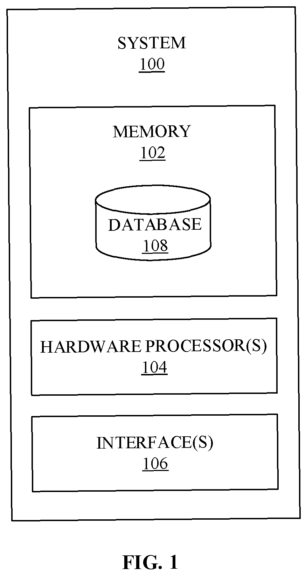

Referring now to the drawings, and more particularly to FIGS. 1 through 6, where similar reference characters denote corresponding features consistently throughout the figures, there are shown preferred embodiments, and these embodiments are described in the context of the following exemplary system and/or method.

FIG. 1 depicts an exemplary system 100 for computing variability and confidence scores for responses generated by large language models (LLMs), in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to user queries, documents for which responses are being generated by one or more Large Language Models, one or more graphs (e.g., query graph, document graph, response graph, query document graph, and the like). The database 108 further comprises variability score, confidence scores, cosine similarities between nodes in the various graphs, one or more weights and one or more thresholds associated with various nodes and graphs, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

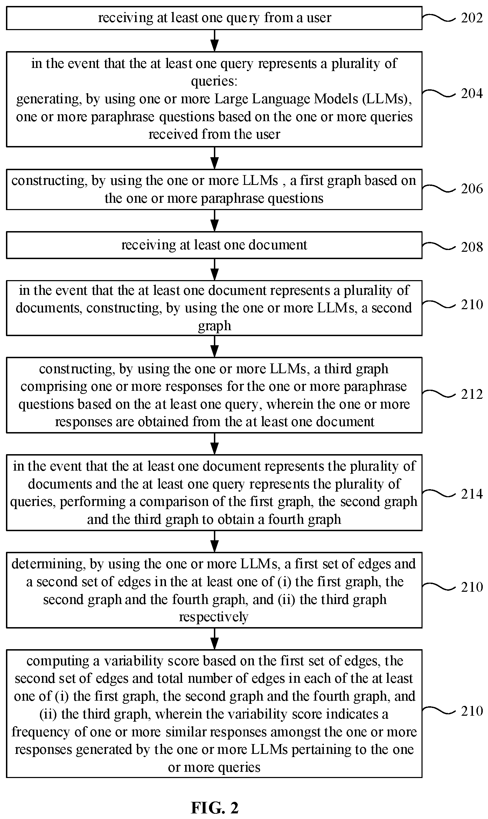

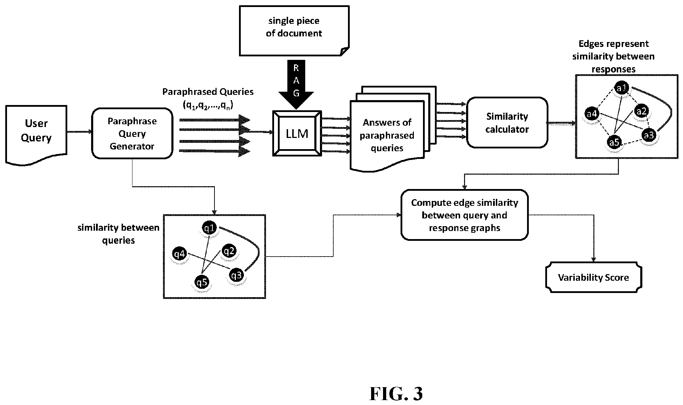

FIG. 2, with reference to FIG. 1, depicts an exemplary flow chart illustrating a method for computing variability and confidence scores for responses generated by large language models (LLMs), using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIGS. 3 through 5, and the flow diagram as depicted in FIG. 2.

At step 202 of the method of the present disclosure, the one or more hardware processors 104 receive at least one query from a user. The at least one query is specific to at least one domain (e.g., say crime domain). It is to be understood by a person having ordinary skill in the art or a person skilled in the art that the at least one query may also represent one or more queries (e.g., either a query or a plurality of queries).

In the event that the at least one query represents the plurality of queries, at step 204 of the method of the present disclosure, the one or more hardware processors 104 generate, by using one or more Large Language Models (LLMs), one or more paraphrase questions based on the one or more queries received from the user. At step 206 of the method of the present disclosure, the one or more hardware processors 104 construct, by using the one or more LLMs, a first graph based on the one or more paraphrase questions. In an embodiment of the present disclosure, the first graph refers to a query graph and the expressions 'first graph' and 'query graph' may be interchangeably used herein.

At step 208 of the method of the present disclosure, the one or more hardware processors 104 receive at least one document. The at least one document may either be obtained from the user or retrieved/obtained from a repository (e.g., say the database 108 of FIG. 1). It is to be understood by a person having ordinary skill in the art or a person skilled in the art that the at least one document may also represent one or more documents (e.g., either a document or a plurality of document)

In the event that the at least one document represents a plurality of documents, at step 210 of the method of the present disclosure, the one or more hardware processors 104 construct, by using the one or more LLMs, a second graph. In an embodiment of the present disclosure, the first graph refers to a document graph and the expressions 'first graph' and 'document graph' may be interchangeably used herein.

At step 212 of the method of the present disclosure, the one or more hardware processors 104 constructing, by using the one or more LLMs via the one or more hardware processors, a third graph comprising one or more responses for the one or more paraphrase questions based on the at least one query. The one or more responses are obtained from the at least one document (e.g., either from the document or from the plurality of documents).

In the event that the at least one document represents the plurality of documents and the at least one query represents the plurality of queries at step 214 of the method of the present disclosure, the one or more hardware processors 104 perform a comparison of the first graph, the second graph and the third graph to obtain a fourth graph. The comparison of the first graph, the second graph and the third graph to obtain the fourth graph is performing using a query document composition technique, in one embodiment of the present disclosure. The fourth graph is also referred to as a query document graph (or QD graph) and may be interchangeably used herein.

At step 216 of the method of the present disclosure, the one or more hardware processors 104 determine, by using the one or more LLMs, a first set of edges and a second set of edges in the at least one of (i) the first graph, the second graph and the fourth graph, and (ii) the third graph respectively. For instance, the first set of edges are referred to as matched edges and the second set of edges are referred to as unmatched edges and may be interchangeably used herein. The first set of edges and the second set of edges are determined based on a comparison of an associated weight and a pre-determined threshold, in one embodiment of the present disclosure. The associated weight assigned to each edge is based on a cosine similarity between two adjacent nodes in an associated graph, in one embodiment of the present disclosure.

Once the first set of edges and the second set of edges are determined, at step 218 of the method of the present disclosure, the one or more hardware processors 104 compute a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries.

The above steps 202 through 218 are better understood by way of following description. For instance, the steps 202 through 210 are performed by the method of the present disclosure for a plurality of scenarios. The first scenario amongst the plurality of scenarios includes a case where there is a single document and multiple query. The first scenario is depicted in FIG. 3. More specifically, FIG. 3, with reference to FIGS. 1-2, depicts a block diagram illustrating a method for computing the variability score for the first scenario having received a single document given as repository with multiple queries from a user, in accordance with an embodiment of the present disclosure.

The system 100 assumes that one document is comprised in the repository/database 108, the document herein is denoted as *D*. Within the context of *D*, a large language model (LLM) is presented with a user query q. The LLM leverages its knowledge base, informed by the document D, to formulate a response. The core of the system 100 as depicted in FIG. 3 lies in the evaluation of the LLM's answer quality, focusing on the dimension of variability.

For the user query *q* the system 100 generate *n* paraphrases, $q_1$, $q_2$, ..., $q_n$ (e.g., refer step 204). To determine the similarities between these question paraphrases, the system 100 constructs a fully connected graph $G_1 = (V, E)$ also referred to a as first graph (e.g., a query graph), where the vertex set V comprises question embeddings ($v_{q_i}$ is the embedding of $q_i$), and the edge set E represents relations between questions (e.g., refer step 206). Each edge is assigned a weight corresponding to the cosine similarity between the adjacent nodes, as given by

$$similarity(v_{q_i}, v_{q_j}) = \frac{v_{q_i}^T \cdot v_{q_j}}{\|v_{q_i}\| \cdot \|v_{q_j}\|}$$

. The system 100 then deletes all edges with weight less than a predetermined threshold $t_1$, where $0 < t_1 < 1$.

The system 100 considers LLM response of $q_i$ with D given as repository as $L(D, q_i)$ i.e., $A_i$. To determine the similarities between these responses, the system 100 construct a fully connected Response Graph $G_3 = (V, E)$ also referred to the third graph (e.g., the response graph), where the vertex set V comprises answer embeddings ($v_{A_i}$ is the embedding of $A_i$), and the edge set E represents relations between responses (e.g., refer step 212). Each edge is assigned a weight corresponding to the similarity between the adjacent nodes. The system 100 then delete all edges with weight less than a predetermined threshold $t_2$, where $0 < t_2 < 1$.

In the ideal case, the graph $G_3$ should be isomorphic to $G_1$ as the responses are generated based on the given queries. So, to compare the similarity between $G_1$ and $G_3$ the one or more hardware processors 104 can compare the inherent properties of two graphs by calculating the first set of edges (e.g., number of matched edges) and the second set of edges (e.g., the number of unmatched edges). If $G_1$ and $G_3$ are isomorphic then the total number of matched edges must be equal to the number of edges present in $G_i$, $\forall i \in \{1,2\}$.

Here, the system 100 considers question/query graph $G_1$ as the reference graph as the answers should follow the similarity structure of the questions in the ideal case. First, the one or more hardware processors 104 calculate the number of matched edges i.e., the edges that are present in both $G_1$ and $G_3$ (e.g., refer step 216). If an edge in $G_1$ connects two nodes $q_i$ and $q_j$ then in the response graph, the matched edge of $edge(q_i, q_j)$ is $edge(A_i, A_j)$ (e.g., refer step 216). Then the one or more hardware processors 104 calculate the unmatched edges between $G_1$ and $G_3$ (e.g., refer step 216). If $edge(q_i, q_j)$ is present in $G_1$ but corresponding $edge(A_i, A_j)$ does not exist in $G_3$ then $edge(q_i, q_j)$ is counted as an unmatched edge (e.g., refer step 216). Similarly if $edge(A_i, A_j) \in G_2 = (V_{G_2}, E_{G_2})$ but $edge(q_i, q_j)$ does not exist in $G_1$ then $edge(A_i, A_j)$ belongs to the set of unmatched edges (e.g., refer step 216).

Here, the system 100 implements a formula to calculate the *Variability Score* ($S_1$) which reflects the number of matched and unmatched edges compared to the total number of edges present in $G_1$ and $G_3$ (e.g., refer step 218).

$$S_1 = \frac{(2 * number\ of\ matched\ edges) - (number\ of\ unmatched\ edges)}{number\ of\ edges\ in\ G_1 + number\ of\ edges\ in\ G_3}.$$

The pseudo code as implemented by the system 100 and the method of the present disclosure for the first scenario is as below (e.g., Variability Calculation for Single Document)

Input: Query *q*
Output: Variability Score
Data: Repository with single document *D*

1. $n \geq 2$

2. Generate $q_1, q_2, \ldots, q_n$ // n different paraphrases of $q$

3. Construct a graph $G_1 = (V, E)$ such that

$$V = \{q_i : 1 \in \{1(1)n\}\}.$$

4. Set threshold $0 \leq t_1 \leq 1$

5. **if** $cosine\ similarity(q_i, q_j) < t_1, i \neq j$ **then**

6. $\quad s \leftarrow cosine\ similarity(q_i, q_j)$

7. $\quad e \leftarrow edge(q_i, q_j)$

8. $\quad w(e) \leftarrow s$

9. **else**

10. $\quad e \leftarrow edge(q_i, q_j)$

11. $\quad w(e) \leftarrow 0$

12. $\quad$ delete $e$

13. Ask $q_1, q_2, \ldots, q_n$ to LLM with $D$ as repository // give $n$ questions as prompt and get n answers $A_i$

14. Set answer of $q_i$ as $A_i, \forall i\ such\ that\ 1 \leq i \leq n$

15. Calculate the embeddings $v_{A_i}$, for each $A_i$

16. Generate a graph $G_2 = (V, E)$ such that $V = \{A_i : i = 1(1)n\}$

17. Set threshold $0 \leq t_2 \leq 1$

18. **if** $cosine\ similarity\left(v_{A_i}, v_{A_j}\right) > t_2, i \neq j$ **then**

19. $\quad s \leftarrow cosine\ similarity\left(v_{A_i}, v_{A_j}\right)$

20. $\quad e \leftarrow edge\left(v_{A_i}, v_{A_j}\right)$

21. $\quad w(e) \leftarrow s$

22. **else**

23. $\quad e \leftarrow edge\left(v_{A_i}, v_{A_j}\right)$

24. $\quad w(e) \leftarrow 0$

25. $\quad$ delete $e$

26. Calculate the number of matched edges between $G_1$ and $G_2$

27. Calculate the number of unmatched edges between $G_1$ and $G_2$

28. Calculate $S_1$ as variability score

29. Return $S_1$

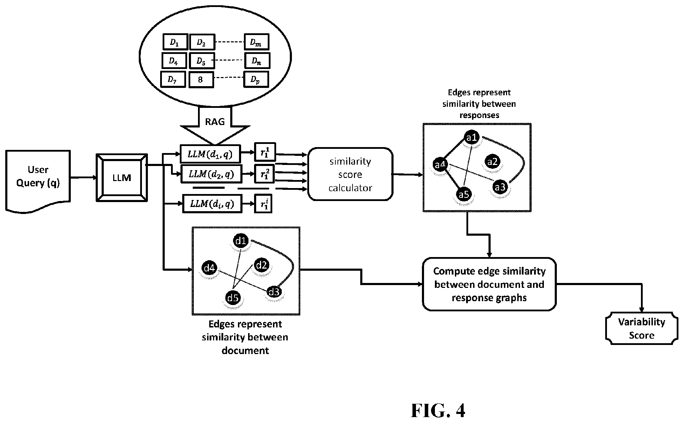

Now, referring to the plurality of scenarios, the second scenario includes a case where there is multiple document (e.g., the at least one document representing a plurality of documents) and single query. The second scenario is depicted in FIG. 4. More specifically, FIG. 4, with reference to FIGS. 1-3, depicts a block diagram illustrating a method for computing the variability score for the second scenario having received multiple documents given as repository with a single query from a user, in accordance with an embodiment of the present disclosure.

In the second scenario, the system 100 tests the Large Language Model's ability to respond to a user's query ($q$) which pertains to a topic that is discussed in multiple documents, such as $D_1$, $D_2$, ... , $D_m$ that are present in the repository/database 108. The second scenario is depicted in FIG. 4 as mentioned above which illustrates a way to calculate the variability score of the response generated by LLM(s), to provide the user with the most concise and useful response.

The system 100 assumes to have a repository of $m$ documents, each containing valuable information. To gain a deeper understanding of the relationships between these documents, the system 100 converts each document $D_j$ to its contextual embedding $v_{D_i}$. This embedding represents the document's underlying meaning and allows the system 100 to compare it to other documents in the repository.

Next, the one or more hardware processors 104 (by using the LLMs) create a fully connected m-dimensional Document Graph $G_2 = (V, E)$, where $V$ represents the set of documents, i.e. $V = \{D_j : i \in (1(1)m)\}$, and $E$ represents the relations between the news documents. Each edge is assigned a weight based on the cosine similarity between the two

$$similarity(v_{D_i}, v_{D_j}) = \frac{v_{D_i}^T . v_{D_j}}{\left\| v_{D_j} \right\| . \left\| v_{D_i} \right\|}$$

connected nodes, which is given by the formula . This ensures that the more similar the two documents are, the higher the weight assigned to the edge between them. Finally, all edges with weight less than a predetermined threshold $t_1$, where $0 < t_1 < 1$ are deleted. This step ensures that only the most relevant relationships between documents remain. By using this approach, the system 100 can gain a richer understanding of the relationships between documents and uncover hidden insights that would have been difficult to identify otherwise.

The system 100 analyzes the response of a Large Language model to a query from different documents present in the repository, referred to as $D_j$. The system 100 denotes the response generated by the model as $L(D_j, q)$, which the system 100 calls $A_i$ for each $D_j$, $1 \le i \le m$. To construct a response graph $G_3 = (V, E)$, where each node in the graph corresponds to an answer $A_j$, the system 100 calculates the contextual embedding $v_{A_i}$ of $A_i$ for all $i$. The system 100 then establishes a predetermined threshold $t_3 > 0$ and consider an undirected edge $E$ between two adjacent nodes $A_j$ and $j$ only if $similarity(v_{A_i}, v_{A_j}) > t_4$. The weight of the edge $E$ is assigned as $similarity(v_{A_i}, v_{A_j})$.

In the first scenario, the system 100 described about how the properties of two graphs are compared, namely Document Graph ($G_2$) and Response Graph ($G_3$), to determine if they are isomorphic or not. This comparison is crucial because if the two documents are similar, the system 100 expects LLM-generated responses for the corresponding documents to be similar as well. To quantify the degree of similarity between the two graphs, the system 100 calculates the variability score using a formula that takes into account isomorphism-related properties of the graphs, i.e.,

$$S_2 = \frac{(2 * number\ of\ matched\ edges) - (number\ of\ unmatched\ edges)}{number\ of\ edges\ in\ G_2 + number\ of\ edges\ in\ G_3}$$

The pseudo code as implemented by the system 100 and the method of the present disclosure for the second scenario is as below (e.g., Variability Calculation for Single Question and Multiple Documents)

Input: Query $q$
Output: Variability Score
Data: Repository with multiple document $D_1$, $D_2$, ... , $D_m$

1. $m \geq 2$

2. Construct a graph $G_2 = (V, E)$ such that

   $$V = \{D_i : 1 \in \{1(1)m\}\}.$$

3. Calculate embedding $v_{D_i}$ for each $D_i$

4. Set threshold $0 \leq t_1 \leq 1$

5. **if** $cosine\ similarity\left(v_{D_i}, v_{D_j}\right) < t_1, i \neq j$ **then**

6.     $s \leftarrow cosine\ similarity\left(v_{D_i}, v_{D_j}\right)$

7.     $e \leftarrow edge\left(v_{D_i}, v_{D_j}\right)$

8.     $w(e) \leftarrow s$

9. **else**

10.     $e \leftarrow edge\left(v_{D_i}, v_{D_j}\right)$

11.     $w(e) \leftarrow 0$

12.     delete $e$

13. **while** $i \leq m$ **do**

14.     Ask $q$ to LLM with $D_i$ as repository

15.     Set the resulting answer of $L(D_i, q)$, as $A_i$

16. Calculate the embeddings $v_{A_i}$, for each $A_i$

17. Generate a graph $G_3 = (V, E)$ such that $V = \{A_i : i = 1(1)n\}$

18. Set threshold $0 \leq t_3 \leq 1$

19. **if** $cosine\ similarity\left(v_{A_i}, v_{A_j}\right) > t_2, i \neq j$ **then**

20. $\quad s \leftarrow cosine\ similarity\left(v_{A_i}, v_{A_j}\right)$

21. $\quad e \leftarrow edge\left(A_i, A_j\right)$

22. $\quad w(e) \leftarrow s$

23. **else**

24. $\quad e \leftarrow edge\left(A_i, A_j\right)$

25. $\quad w(e) \leftarrow 0$

26. $\quad$ delete $e$

27. Calculate the number of matched edges between $G_2$ and $G_3$

28. Calculate the number of unmatched edges between $G_2$ and $G_3$

29. Calculate $S_2$ as variability score

30. Return $S_2$

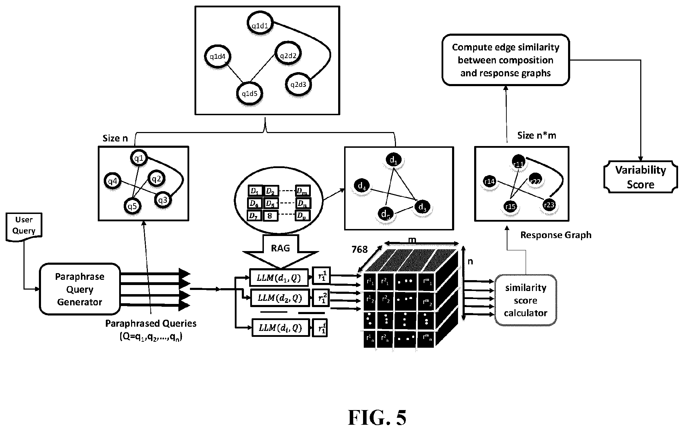

Now, referring to the plurality of scenarios, the third scenario includes a case where there is multiple document (e.g., the at least one document representing a plurality of documents) and multiple query (e.g., a plurality of queries). The third scenario is depicted in FIG. 5. More specifically, FIG. 5, with reference to FIGS. 1-4, depicts a block diagram illustrating a method for computing the variability score for the third scenario having received multiple documents given as repository with multiple queries from a user, in accordance with an embodiment of the present disclosure.

The system 100 receives several documents contained in the repository, and the one or more hardware processors 104 (by using the one or more LLMs) create $n$ distinct paraphrases of the user query $q,$ that is, $q_1, q_2, ... ,$ $q_n.$ The system 100 assumes there are $m$ documents available in the repository named $D_1, D_2, ... , D_m.$

As described above, the system 100 first creates the Document Graph to comprehend the connections between different documents. Since the answer to query $q$ is covered in multiple documents, it is important to understand the similarities between the topics discussed in those documents to evaluate the quality of the LLM-generated responses. The document graph is denoted as $D$ (e.g., also refer to as $G_2$ in the context for the sake of brevity).

Then the system 100 creates the question graph $Q$ (e.g., the first graph which can be referred to as $G_1$ in this context for the sake of brevity) with $n$ number of question paraphrases. This graph ensures that the semantic and syntactic structure differences are taken into consideration if it is present in the question paraphrases asked to the large language model. This step enhances the credibility of our Model Architecture as it helps us to compare the LLM-generated responses for similar prompts.

Then to compare both Query Graph (Q) and Document Graph (D) to the Response Graph the system 100 performs a Query Document Composition and generates the resultant graph $QD = \{q_i d_j: i \in \{1,2, ... , n\}, j \in \{1,2, ... , m\}\}.$ The resultant graph is also referred to a fourth graph and may be interchangeably used herein. Here, the system 100 concatenates the embedding of $q_i$ and $D_j$ i.e., $q_i$ and $V_{D_j}$ and denote the embedding of the node $q_i d_j$ as $e_{q_i d_j}.$ The edge between two nodes of the graph $QD$ i.e., $q_i d_j$ and $q_l d_k$ exists if the cosine similarity of $(e_{q_i d_j}, e_{q_l d_k}) > t$ where $t$ is greater than the pre-determined threshold for the construction of both **Document Graph(D)** and **Query Graph(Q).** The formula of cosine similarity is given as:

$$similarity(e_{q_i D_j}, e_{q_l D_k}) = \frac{e_{q_i D_j}^T \cdot e_{q_l D_k}}{\left\| e_{q_i D_j} \right\| \cdot \left\| e_{q_l D_k} \right\|}$$

The process of constructing the Response Graph involves multiple steps. Firstly, the system 100 asks each question paraphrase $q_i$ to the document $D_j$ to obtain the LLM-generated response $A_{ij},$ where $1 \leq i \leq n$ and $1 \leq j \leq m.$ This step is crucial in identifying the most relevant information within the given document for each question.

Next, the system 100 uses the embedding $v_{A_{ij}}$ of $A_{ij}$ to calculate the cosine similarity between the responses. This step identifies the connections between different responses and determines which responses are most similar to each other. Then the system 100 constructs the **Response Graph(R).**

To calculate the variability score of the answers, the system 100 implements the following formulation,

$$S_3 = \frac{(2 * number\ of\ matched\ edges) - (number\ of\ unmatched\ edges)}{number\ of\ edges\ in\ QD + number\ of\ edges\ in\ R}$$

The pseudo code as implemented by the system 100 and the method of the present disclosure for the third scenario is as below (e.g., Variability Calculation for Multiple Document Multiple Question)

Input: Query $q$
Output: Variability Score
Data: Repository with multiple document $D_1, D_2, ... , D_m$

1. $m \geq 2, n \geq 2$

2. Generate $q_1, q_2, ..., q_n$ // n different paraphrases of $q$

3. Construct a graph $Q = (V, E)$ such that

   $V = \{q_i : 1 \in \{1(1)n\}\}$.

4. Calculate embedding $v_{q_i}$ for each $q_i$

5. Set threshold $0 \leq t_1 \leq 1$

6. **if** $cosine\ similarity(q_i, q_j) < t_1, i \neq j$ **then**

7.     $s \leftarrow cosine\ similarity\left(v_{q_i}, v_{q_j}\right)$

8.     $e \leftarrow edge\left(v_{q_i}, v_{q_j}\right)$

9.     $w(e) \leftarrow s$

10. **else**

11.     $e \leftarrow edge\left(v_{q_i}, v_{q_j}\right)$

12.     $w(e) \leftarrow 0$

13.     delete $e$

14. Construct a graph $D = (V, E)$ such that
$$V = \{D_i : 1 \in \{1(1)m\}\}.$$

15. Calculate embedding $v_{D_i}$ for each $D_i$

16. Set threshold $0 \leq t_2 \leq 1$

17. $edge\left(v_{D_i}, v_{D_j}\right)$ exists if $sim = cosine$
$$similarity(v_{D_i}, v_{D_j} > t_2)$$

18. $w(edge\left(v_{D_i}, v_{D_j}\right) \leftarrow sim$

19. Set $t \leftarrow \max\{t_1, t_2\}$

20. Concatenate $q_i$ and $d_j$ and generated $QD = (V, E)$
$$\text{where } V = \{q_i d_j : 1 \leq i \leq n, 1 \leq j \leq m\} \text{ // } |V| = mn$$

21. Concatenate $v_{q_i}$ and $v_{d_j}$ to calculate the embedding of $q_i d_j$ i.e., $e_{q_i d_j}$

22. $edge\left(q_i d_j, q_k d_l\right)$ exists if $sim = cosine$
$$similarity(e_{q_i d_j}, e_{q_k d_l} > t)$$

23. $w(edge\left(q_i d_j, q_k d_l\right)) \leftarrow sim$

24. **while** $i \leq n$ **do**

25.     **while** $j \leq m$ **do**

26.         Ask $q_i$ to LLM with $D_j$ as repository

27.         Set the resulting answer of $L(D_j, q_i)$, as $A_{ij}$

28. Calculate the embeddings $v_{A_j}$, for each $A_{ij}$

29. Generate a response graph $G_3(R) = (V, E)$ s.t $V = \{A_{ij} : j \in 1(1)m, i \in 1(1)n\}$ // $|V| = mn$

30. **if** $cosine\ similarity\left(A_{ij}, A_{kl}\right) > t, \{i, j\} \neq \{k, l\}$ **then**

31.     $s \leftarrow cosine\ similarity\left(A_{ij}, A_{kl}\right)$

32.     $e \leftarrow edge\left(A_{ij}, A_{kl}\right)$

33.     $w(e) \leftarrow s$

34. **else**

35. $e \leftarrow edge\big(A_{ij}, A_{kl}\big)$

36. $w(e) \leftarrow 0$

37. delete $e$

38. Calculate the number of matched edges between $QD$ and $G_3(R)$

39. Calculate the number of unmatched edges between $QD$ and $G_3(R)$

40. Calculate $S_3$ as variability score.

41. Return $S_3$

The system 100 then further generates the confidence score for the response graph. More specifically, the system 100 performs a graph clustering on the third graph ($G_3/R$) to determine a plurality of dense regions. The plurality of dense regions is then clustered to obtain one or more dense regions clusters. The confidence score for the third graph/the LLMs is then computed based on the one or more dense regions clusters. The confidence score refers to a measure of consistency and reliability of the one or more responses comprised in the third graph, in one embodiment of the present disclosure. The above steps of computing the confidence score for the third graph/LLMs is better understood by way of following description.

The confidence score of answers generated by Large Language Models (LLMs) represents how many times LLM has generated the same or similar answers. To determine the confidence score of LLM-generated answers, the system 100 constructs a Response Graph that considers the architecture of the variability score. The confidence property is reflected in how densely connected the response graph is. Ideally, the entire graph should become one densely connected component. But this property does not reflect in practicality. To analyze which part of the graph is denser, the system 100 uses Graph Clustering technique (also referred to as graph clustering and interchangeably used herein. After conducting Graph Cluster Analysis, the system 100 identifies the dense components of the graph and clusters them. The radius of the largest cluster represents the confidence score of the graph, in one embodiment of the present disclosure. It is to be understood by a person having ordinary skill in the art or person skilled in the art that other associated parameters of the largest cluster may also be used to represent the confidence score of the response graph and such examples shall not be construed as limiting the scope of the present disclosure. For example, methods such as degree centrality, eigen value centrality, graph connectivity, or number of cliques can also be used, instead of density measure, to compute the confidence score, in one embodiment of the present disclosure.

As mentioned above, the system 100 considers a repository of m documents, $D_1, D_2, \dots, D_m$. To assist the user with their query $q$, the system 100 generates $n$ paraphrases of the question: $q_1, q_2, \dots, q_n$. The system 100 asks each of these paraphrased questions $q_i$ to every document $D_j$, for all values of $i$ and $j$, and denote the answer generated by LLM as $L(D_j, q_i)$, which is referred to as $A_{ij}$. A Response Graph $R = (V, E)$ with $m * n$ dimensions is then constructed, where $V = \{A_{ij}: 1 \leq i \leq n, 1 \leq j \leq m\}$. The weight of the edge between $A_{ij}$ and $A_{pq}$ is the cosine similarity between their corresponding answers.

Graph clustering is the task of grouping the vertices of the graph into clusters taking into consideration the edge structure of the graph in such a way that there should be many edges within each cluster and relatively few between the clusters. Graph clustering in the sense of grouping the vertices of a given input graph into clusters. Here, the Shared Nearest Neighbor algorithm/clustering technique is used to do the graph clustering by the system 100 and the method, in one embodiment of the present disclosure.

First, the system 100 computes the similarity matrix $M_R$ of R. This corresponds to a similarity graph with data points for nodes and edges whose weights are the similarities between data points. Then the system 100 sparsifies $M_R$ by keeping only the $k$ most similar neighbors. This corresponds to keeping only the $k$-strongest links. The Shared Nearest Neighbor Similarity is defined as:

*SNN Similarity* $(x, y)$ = Number of Shared Neighbors between the Two Nodes $x$ and y

The system 100 assumes a parameter *Eps, MinPts* > 0 which should be specified by the user. For each $v \in V$, the system 100 finds out the SNN Density of $v$. The mathematical expression of SNN Density is given below:

$$SNN\ Density\ (v) = |\{x \in V : SNN\ Similarity(x, v) > Eps\}|$$

The points of graph R which have the *SNN Density* greater than the user-specified parameter *MinPts* is labeled as the **Core Points**. If two **Core Points** are within a radius of *Eps* of each other, then the core points are placed in the same cluster. In this way, the system 100 forms clusters from the core points. Then, all the non-core points that are not present within a radius of any core points are discarded. This step eliminates all the noise points in the graph. Then the system 100 assigns all the non-core non-noise points to their nearest core point.

After clustering the graph *R* by *SNN Method,* the system 100 defines *Confidence Score* (*ConScore*) as:

$$ConScore \;=\; inf\{r\!:\!r > r_{C_i} \forall i, where \; C_i \; is \; a \; cluster \; in \; R\}$$

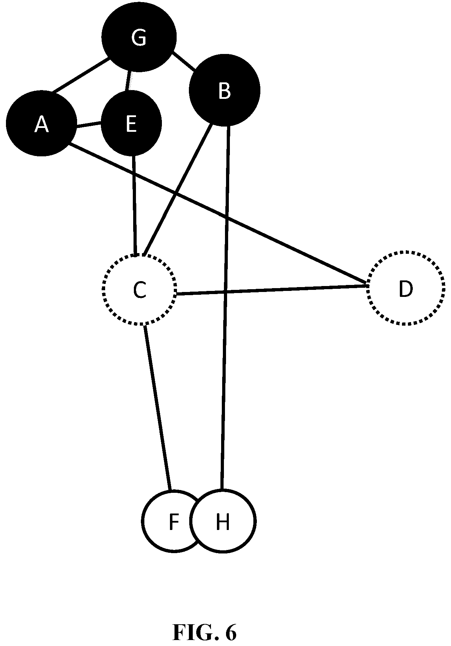

Here, $r_{c_i}$ denotes the radius of the cluster $C_i$. The largest cluster denotes the largest dense part of the graph. So, any answer from that cluster is the most confident LLM-generated response of the query *q*. For example, in the graph depicted in FIG. 6, wherein the largest cluster is shown. So, *ConScore* = 2. More specifically, FIG. 6, with reference to FIGS. 1 through 5, depicts clusters of dense regions associated with a response graph for computation of confidence score for LLMs, in accordance with an embodiment of the present disclosure.

The pseudo code as implemented by the system 100 and the method of the present disclosure for the computation of confidence score is as below (e.g., Confidence Calculation for Multiple Documents):

Input: Query *q*
Output: Variability Score
Data: Repository with multiple document $D_1, D_2, ... , D_m$

1. $m \geq 2$

2. Set threshold $t_1, t_2 > 0$

3. Generate $q_1, q_2, \ldots, q_n$ // n different paraphrases of $q$ such that

4. $cosine\ similarity\left(v_{q_i}, v_{q_j}\right) > t_1, i \neq j$ // $v_{q_i}$ is the embedding of $q_i$

5. **while** $i \leq n$ **do**

6.     **while** $j \leq m$ **do**

7.         Ask $q_i$ to LLM with $D_j$ as repository

8.         Set the resulting answer of $L(D_j, q_i)$, as $A_{ij}$

9. Calculate the embeddings $v_{A_j}$, for each $A_{ij}$

$$V = \{A_{ij} : j \in 1(1)n, j \in 1(1)m\}$$

10. $E = edge\left(A_{ij}, A_{pq}\right)$ exists if

$$cosine\ similarity\left(A_{ij}, A_{pq}\right) > t_2$$

11. Set $w(E) \leftarrow cosine\ similarity\left(A_{ij}, A_{pq}\right)$ where,

$$E = edge\left(A_{ij}, A_{pq}\right)\ \text{exists}$$

12. Set threshold $k > 1$

13. Sparisfy $M_R$ by keeping only the $k$-strongest links

14. Find the $k$-nearest neighbors of all points

15. **if** $x$ and $y$ are $k$-nearest neighbors **then**

16.     $SNN\ similarity(x, y) \leftarrow the\ number\ of\ shared\ neighbors$

17. **else**

18.     $SNN\ similarity(x, y) \leftarrow 0$

19. Calculate $SNN\ similarity$ of $A_{ij}\ \forall i \in \{1(1)n\}, j \in \{1(1)m\}$

20. Set user specified parameter $Eps$ and $MinPts$

21. **while** $i \leq n$ **do**

22.     **while** $j \leq m$ **do**

23.         $c \leftarrow 0$

24.       **while** $p \leq n$ **do**

25.         **while** $q \leq m$ **do**

26.           **if** $SNN\ similarity(A_{ij}, A_{pq}) \geq Eps$ **then**

$$c \leftarrow c + 1$$

27.           Set $SNN\ density(A_{ij}) \leftarrow c$

28. **if** $SNN\ density(A_{ij}) \geq MinPts$ **then**

29.     Set $A_{ij} \leftarrow core\ point$

30. **if** $d(A_{ij}, A_{pq}) \leq Eps$ , $A_{ij}$ and $A_{pq}$ are in same cluster $//\ A_{ij}$ and $A_{pq}$ are core points

31. All non-core pints that are not within a radius of $Eps$ of a core point are discarded.

32. Assign all non-noise, non-core points to clusters containing the nearest core point.

33. Set ***Confidence score*** $\leftarrow Radius\ of\ the\ largest\ cluster$

34. Return ***Confidence score***

The above description of FIG. 2 with reference to FIGS. 3 through 6, and the pseudo codes for the mentioned 3 scenarios are better understood by way of following use case:

The system 100 and the method of the present disclosure consider an adverse media search as a use case for analysis, visualization, and retrieval of financial crime incidents from the Open Web. Below provided is a brief explanation of the use case.

Banks and Financial Institutions provide various financial products and services to customers. Regulatory Authorities require these institutions to monitor, assess and effectively mitigate the risk associated with sanctions, money laundering, fraudulent activities, etc. while doing business or carrying out transactions with customers. These types of checks are also referred to as "Adverse Media Screening" (ADVM) and are required to be done at the time of onboarding and transaction processing.

The system 100 and method of the present disclosure was implemented as a Machine Assisted Compliance Screening (MACS) addressing various facets of compliance screening. Adverse Media Screening is a very important and critical component of the present disclosure since it addresses the areas related to Anti-Money Laundering (AML) and Know Your Customer (KYC). Adverse Media Screening is domain and lone of business agnostic and is applicable across the Banks/financial institutions be it Retail Banking, Corporate Banking, Capital markets, etc.

Adverse Media Screening, also known as Negative Media/News search, is the process of screening financial institution's client, both corporate and individual against information available in public sources to identify if there is any involvement of individual or corporate in money laundering, financial crime/fraud, Organize crime, drug trafficking, criminal activities, and many more. Organisations such as Financial Action Task Force (FATF), The Wolfsberg Group, FinCEN identify Negative Media Screening as a part of enhanced due diligence practices concerning risk assessment. Any breakage in this process leads to huge penalties which can run into millions or billions. For instance, in research conducted, a large global top-tier bank paid close to USD 8 billion in penalties for breakages in the processes. Regulators are closely monitoring the effectiveness of this control in Banks.

Negative news about an individual or a corporate customer is derived from official news sources, social media, blogs, web articles, databases, other internet forums, etc. through various search engines. Typically, most of the data is unstructured in nature. This makes extraction of relevant information a non-trivial problem. Moreover, it also requires development of intelligent techniques that can sift through large volumes of heterogeneous data to unearth explicit and implicit links among apparently unrelated content to discover trends and patterns that can be used for strategic decision making.

Once a news story is found, the compliance reviewer in the Bank/financial institution reviews and cross checks the information with the subject screening party in question to determine whether it has a valid impact or is a false positive. Typically, the entire process is performed manually across Banks/financial institutions. Naturally, the search process is time consuming and complex. The volumes of data that are provided by the search engines over the internet is huge and therefore, multiple people are needed to be employed for the search analysis purpose. Thus, this process becomes very subjective because of the nature of such a review and may lead to inconsistencies from one reviewer to another.

In order to address the aforementioned challenges, the system 100 and the method of the present disclosure can enable perform automatic curation, analysis and visualization of crime incidents and produce a comprehensive summary of the retrieved information. The system 100 exploits Natural Language Processing (NLP) techniques and applies LLMs to detect and classify textual elements as crime information indicators. Exemplary indicators include but are not limited to, name of the accused and the victims, crime location, the section under which the crime is tried.

Results:

Experimental details:

1. For the above-mentioned scenario, the system 100 received p questions (q) and $t$ documents ($D$) taken from test dataset.
2. 10 paraphrase question of $q_p$, i.e., $q_1$, $q_2$, ..., $q_{10}$.
3. The system 100 then asked $q_i$ to a LLM (e.g., LLAMA-2 13B) with D as repository to obtain a corresponding response (or answer) $a_i$.
4. The system 100 then constructed an answer graph G where each node represents $a_i$ and the edge between $a_i$ and $a_j$ is set as cosine similarity between the FAISS embedding of $a_i$ and $a_j$. The edge between $a_i$ and $a_j$ only exists if $\cos(a_i, a_j) > 0.8$, 0.8 being a pre-defined threshold.
5. The system 100 then calculated a degree centrality of the graph $G$ and the node with highest degree was returned as a final response (answer of the LLM).
6. With a help of RAG (resource allocation graph?), the system 100 then queried LLAMA2 the same question $q$ with the document $D$ given as the repository. This is referred to as a LLAMA2 response/answer.
7. Then the system 100 queries a conventional GEN AI (e.g., say LLM-x) with the document $D$ given as the repository. This is referred to as a LLM-x response/answer.
8. A BERTscore, SacreBLEU, Bluert, Wer were calculated separately for the response generated by the LLM of the system 100 as well as LLAMA1 response wherein LLM-x response is also given as a reference. The results are depicted in below Table 3 by way of examples:

Table 3

| Metrics | Results of the system and method of the present disclosure (One repository Multiple Question Paraphrases) - scenario 1 (the final answer/response is chosen from the graph through Degree Centrality) | LLAMA-2 result (prior art) |
|---|---|---|
| bertscore distilbert-base-uncased f1 | **0.823147488** | 0.800619681 |
| Sacrebleu (A Call for Clarity in Reporting BLEU Scores ( https://arxiv.org/pdf/1804.08771 ) | **28.1** | 15 |
| Bleu (BLEU: a Method for Automatic Evaluation of Machine Translation ( https://aclanthology.org/P02-1040.pdf )) | **0.3** | 0.2 |
| WER ((Word Error Rate) Paper name: A New Quantitative Quality Measure for Machine Translation Systems (https://aclanthology.org/C92-2067.pdf)) | **0.949626131** | 1.180204644 |
| bleurtbleurt-large-512 ((Bilingual Evaluation Understudy with Representations from Transformers) Robust Metrics for Text Generation Paper name: BLEURT: Learning Robust Metrics for Text Generation (https://aclanthology.org/2020.acl-main.704.pdf)) | **-0.348566425** | -0.473131731 |

Table 4 depicts results for multi document single question/query (scenario 2), by way of examples:

Table 4

| Metrics | Results of the system and method of the present disclosure (multi document single question/query) - scenario 2 | LLAMA-2 result (prior art) |
|---|---|---|
| Bert Score ((Bidirectional Encoder Representations from Transformers-Score) Paper name: BERTSCORE: EVALUATING TEXT GENERATION WITH BERT (https://arxiv.org/pdf/1904.09675)) | 0.81135221 | 0.798936033 |
| SacreBleu | 8.5 | 9.6 |
| BLEU | 0.1 | 0.1 |
| BLEURT | -0.790607923 | -0.669648106 |
| WER | 0.5051756007 | 1.00831793 |

Table 5 depicts results for multi document multiple question/query (scenario 3), by way of examples:

Table 5

| Metrics | Results of the system and method of the present disclosure (multiple document multiple question/query) - scenario 3 | LLAMA-2 result (prior art) |
|---|---|---|
| Bert Score | 0.870803484 | 0.786867134 |
| SacreBleu | 9.033333333 | 7.833333333 |
| BLEU | 0.66666667 | 0.1 |
| BLEURT | -0.790629854 | -0.730339939 |
| WER | .517162235 | 1.267334862 |

Large Language Models (LLMs) have become indispensable tools for a wide array of applications, ranging from natural language understanding to content generation. However, the unrestrained growth of LLMs has unveiled a significant concern in terms of their susceptibility to hallucinations, inconsistent responses, and a lack of confidence in their predictions. This poses a substantial hurdle for users and organizations relying on the outputs of LLMs, particularly in scenarios where precision and reliability are paramount. The system and method of the present disclosure address the challenges associated with LLMs by identifying and selecting models that demonstrate low variability and exhibit a high confidence factor. The method of the present disclosure aims to enhance the reliability of LLM outputs, providing users with more consistent and trustworthy results across various applications. The method of the present disclosure involves a comprehensive evaluation of two critical LLM performance metrics namely, the variability of response and the confidence of response, through a curated set of validation data. By leveraging advanced statistical techniques and machine learning algorithms, the system 100 can discern patterns and characteristics that distinguish LLMs with superior performance in terms of variability and confidence.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:

   receiving, via one or more hardware processors, at least one query from a user (202);
   in the event that the at least one query represents a plurality of queries:

   generating, by using one or more Large Language Models (LLMs) via the one or more hardware processors, one or more paraphrase questions based on the one or more queries received from the user (204); and constructing, by using the one or more LLMs via the one or more hardware processors, a first graph based on the one or more paraphrase questions (206);
   receiving, via the one or more hardware processors, at least one document (208);
   in the event that the at least one document represents a plurality of documents, constructing, by using the one or more LLMs via the one or more hardware processors, a second graph (210);
   constructing, by using the one or more LLMs via the one or more hardware processors, a third graph comprising one or more responses for the one or more paraphrase questions based on the at least one query, wherein the one or more responses are obtained from the at least one document (212);
   in the event that the at least one document represents the plurality of documents and the at least one query represents the plurality of queries, performing, via the one or more hardware processors, a comparison of the first graph, the second graph and the third graph to obtain a fourth graph (214);
   determining, by using the one or more LLMs via the one or more hardware processors, a first set of edges and a second set of edges in the at least one of (i) the first graph, the second graph and the fourth graph, and (ii) the third graph respectively (216); and
   computing, via the one or more hardware processors, a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries (218).

2. The processor implemented method as claimed in claim 1, further comprising:

performing a graph clustering on the third graph to determine a plurality of dense regions;
clustering the plurality of dense regions to obtain one or more dense regions clusters; and
computing a confidence score for the third graph based on the one or more dense regions clusters, wherein the confidence score refers to a measure of consistency and reliability of the one or more responses comprised in the third graph.

3. The processor implemented methods claimed in claim 1, wherein the first set of edges and the second set of edges are determined based on a comparison of an associated weight and a pre-determined threshold.

4. The processor implemented method as claimed in claim 3, wherein the associated weight assigned to each edge is based on a cosine similarity between two adjacent nodes in an associated graph.

5. The processor implemented method as claimed in claim 1, wherein the comparison of the first graph, the second graph and the third graph to obtain the fourth graph is performing using a query document composition technique.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive at least one query from a user;
in the event that the at least one query represents a plurality of queries:

generate, by using one or more Large Language Models (LLMs), one or more paraphrase questions based on the one or more queries received from the user; and
construct, by using the one or more LLMs, a first graph based on the one or more paraphrase questions;
receive at least one document;
in the event that the at least one document represents a plurality of documents, construct, by using the one or more LLMs, a second graph;
construct, by using the one or more LLMs, a third graph comprising one or more responses for the one or more paraphrase questions based on the at least one query, wherein the one or more responses are obtained from the at least one document;
in the event that the at least one document represents the plurality of documents and the at least one query represents the plurality of queries, perform, by using the one or more LLMs, a comparison of the first graph, the second graph and the third graph to obtain a fourth graph;
determine, by using the one or more LLMs, a first set of edges and a second set of edges in the at least one of (i) the first graph, the second graph and the fourth graph, and (ii) the third graph respectively; and
compute a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries.

7. The system as claimed in claim 6, wherein the one or more hardware processors are configured by the instructions to:

perform a graph clustering on the third graph to determine a plurality of dense regions;
cluster the plurality of dense regions to obtain one or more dense regions clusters; and
compute a confidence score for the third graph based on the one or more dense regions clusters, wherein the confidence score refers to a measure of consistency and reliability of the one or more responses comprised in the third graph.

8. The system as claimed in claim 6, wherein the first set of edges and the second set of edges are determined based on a comparison of an associated weight and a pre-determined threshold.

9. The system as claimed in claim 8, wherein the associated weight assigned to each edge is based on a cosine similarity between two adjacent nodes in an associated graph.

10. The system as claimed in claim 6, wherein the comparison of the first graph, the second graph and the third graph to obtain the fourth graph is performing using a query document composition technique.

11. One or more non-transitory machine-readable information storage mediums comprising one or more instructions which when executed by one or more hardware processors cause:

receiving at least one query from a user ;
in the event that the at least one query represents a plurality of queries:

generating, by using one or more Large Language Models (LLMs), one or more paraphrase questions based on the one or more queries received from the user ; and
constructing, by using the one or more LLMs, a first graph based on the one or more paraphrase questions ;
receiving at least one document ;
in the event that the at least one document represents a plurality of documents, constructing, by using the one or more LLMs, a second graph ;
constructing, by using the one or more LLMs, a third graph comprising one or more responses for the one or more paraphrase questions based on the at least one query, wherein the one or more responses are obtained from the at least one document ;
in the event that the at least one document represents the plurality of documents and the at least one query represents the plurality of queries, performing a comparison of the first graph, the second graph and the third graph to obtain a fourth graph ;
determining, by using the one or more LLMs, a first set of edges and a second set of edges in the at least one of (i) the first graph, the second graph and the fourth graph, and (ii) the third graph respectively ; and
computing a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries .

12. The one or more non-transitory machine-readable information storage mediums as claimed in claim 11, wherein the one or more instructions which when executed by the one or more hardware processors further cause:

performing a graph clustering on the third graph to determine a plurality of dense regions;
clustering the plurality of dense regions to obtain one or more dense regions clusters; and
computing a confidence score for the third graph based on the one or more dense regions clusters, wherein the confidence score refers to a measure of consistency and reliability of the one or more responses comprised in the third graph.

13. The one or more non-transitory machine-readable information storage mediums as claimed in claim 11, wherein the first set of edges and the second set of edges are determined based on a comparison of an associated weight and a pre-determined threshold.

14. The one or more non-transitory machine-readable information storage mediums as claimed in claim 13, wherein the associated weight assigned to each edge is based on a cosine similarity between two adjacent nodes in an associated graph.

15. The one or more non-transitory machine-readable information storage mediums as claimed in claim 11, wherein the comparison of the first graph, the second graph and the third graph to obtain the fourth graph is performing using a query document composition technique.

SYSTEM
100

MEMORY
102

DATABASE
108

HARDWARE PROCESSOR(S)
104

INTERFACE(S)
106

**FIG. 1**

| receiving at least one query from a user | ~ 202 |

↓

| in the event that the at least one query represents a plurality of queries:<br>generating, by using one or more Large Language Models (LLMs), one or more paraphrase questions based on the one or more queries received from the user | ~ 204 |

↓

| constructing, by using the one or more LLMs , a first graph based on the one or more paraphrase questions | ~ 206 |

↓

| receiving at least one document | ~ 208 |

↓

| in the event that the at least one document represents a plurality of documents, constructing, by using the one or more LLMs, a second graph | ~ 210 |

↓

| constructing, by using the one or more LLMs, a third graph comprising one or more responses for the one or more paraphrase questions based on the at least one query, wherein the one or more responses are obtained from the at least one document | ~ 212 |

↓

| in the event that the at least one document represents the plurality of documents and the at least one query represents the plurality of queries, performing a comparison of the first graph, the second graph and the third graph to obtain a fourth graph | ~ 214 |

↓

| determining, by using the one or more LLMs, a first set of edges and a second set of edges in the at least one of (i) the first graph, the second graph and the fourth graph, and (ii) the third graph respectively | ~ 210 |

↓

| computing a variability score based on the first set of edges, the second set of edges and total number of edges in each of the at least one of (i) the first graph, the second graph and the fourth graph, and (ii) the third graph, wherein the variability score indicates a frequency of one or more similar responses amongst the one or more responses generated by the one or more LLMs pertaining to the one or more queries | ~ 210 |

**FIG. 2**

**FIG. 3**

**FIG. 4**

**FIG. 5**

**FIG. 6**

**EUROPEAN SEARCH REPORT**

Application Number

EP 25 18 4121

## DOCUMENTS CONSIDERED TO BE RELEVANT

| Category | Citation of document with indication, where appropriate, of relevant passages | Relevant to claim |
|---|---|---|
| X | US 2023/350929 A1 (HASAN ASIF ET AL) 2 November 2023 (2023-11-02) * paragraph [0014] - paragraph [0204] * ----- | 1-15 |
| X | US 2023/316006 A1 (TUNSTALL-PEDOE WILLIAM [GB] ET AL) 5 October 2023 (2023-10-05) * the whole document * ----- | 1-15 |
| A | US 2018/307726 A1 (KREUTZER TOR [NO] ET AL) 25 October 2018 (2018-10-25) * the whole document * ----- | 1-15 |

**CLASSIFICATION OF THE APPLICATION (IPC)**

INV.
G06F16/3329
G06F40/30

**TECHNICAL FIELDS SEARCHED (IPC)**

G06F
G06N

The present search report has been drawn up for all claims

| Place of search | Date of completion of the search | Examiner |
|---|---|---|
| The Hague | 30 October 2025 | Warry, Lawrence |

EPO FORM 1503 03.82 (P04C01)

## ANNEX TO THE EUROPEAN SEARCH REPORT
## ON EUROPEAN PATENT APPLICATION NO.

EP 25 18 4121

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2025

| Patent document cited in search report | Publication date | Patent family member(s) | Publication date |
|---|---|---|---|
| US 2023350929 A1 | 02-11-2023 | NONE | |
| US 2023316006 A1 | 05-10-2023 | US 2023316006 A1 | 05-10-2023 |
| | | US 2024095468 A1 | 21-03-2024 |
| US 2018307726 A1 | 25-10-2018 | CN 110574017 A | 13-12-2019 |
| | | EP 3612956 A1 | 26-02-2020 |
| | | US 2018307726 A1 | 25-10-2018 |
| | | US 2022083550 A1 | 17-03-2022 |
| | | WO 2018194865 A1 | 25-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421048660